Europäisches Patentamt

European Patent Office

Office européen des brevets

(11) Numéro de publication : **0 307 329 B1**

(12) **FASCICULE DE BREVET EUROPEEN**

(19)

(12)

(45) Date de publication du fascicule du brevet :
**12.02.92 Bulletin 92/07**

(21) Numéro de dépôt : **88420304.3**

(22) Date de dépôt : **08.09.88**

(51) Int. Cl.⁵ : **A47J 45/06**

(54) Manche ergonomique pour article culinaire.

(30) Priorité : **08.09.87 FR 8712659**

(43) Date de publication de la demande :
**15.03.89 Bulletin 89/11**

(45) Mention de la délivrance du brevet :
**12.02.92 Bulletin 92/07**

(84) Etats contractants désignés :
**DE ES GB IT**

(56) Documents cités :
**DE-A- 3 400 005**
**FR-A- 909 352**

(56) Documents cités :
**GB-A- 422 254**
**GB-A- 974 317**
**US-A- 2 345 248**
**Catalogue BERROD 1980/81 - Modèle déposé**

(73) Titulaire : **Terraillon**
**Route de Thonon Juvigny**
**F-74100 Annemasse (FR)**

(72) Inventeur : **Gagnepain, Didier**
**Plottes**
**F-71700 Tournus (FR)**

(74) Mandataire : **de Beaumont, Michel**
**Cabinet Poncet 7, chemin de Tillier B.P. 317**
**F-74008 Annecy Cédex (FR)**

EP 0 307 329 B1

Jouve, 18, rue Saint-Denis, 75001 PARIS

## Description

La présente invention concerne les manches permettant la manutention d'articles culinaires tels que casseroles, sauteuses, poêles à frire.

Le brevet US-A-2 345 248 décrit un manche d'article culinaire dans lequel la face inférieure du manche présente une partie centrale concave en arc définissant un logement transversal dans lequel peuvent se loger quatre doigts d'une main. Un logement est prévu pour le pouce sur une face latérale de manche. Un tel manche est adapté à une préhension dans laquelle le pouce est sur le côté du manche. Les efforts de tenue de l'article culinaire sont supportés en partie par les forces de frottement des doigts de main sur les faces latérales de manche. Il en résulte que la tenue de l'article culinaire requiert des efforts importants pour produire lesdits frottements latéraux, et que le poignet se trouve dans une orientation qui n'est pas favorable pour effectuer des mouvements de basculement d'axe transversal.

Le document GB-A-422 254 décrit un manche pour article culinaire comprenant un corps allongé terminé par une première extrémité de liaison avec le corps d'article culinaire et par une seconde extrémité libre ; la face inférieure du manche comprend 5 rainures transversales à bords arrondis, et notamment une première rainure transversale disposée relativement proche de la première extrémité du manche, de section adaptée pour permettre l'engagement d'un doigt de l'utilisateur, et une seconde rainure transversale proche de la seconde extrémité du manche et permettant l'engagement d'un doigt de main de l'utilisateur. Un tel manche est bien adapté pour une tenue en pleine main, tenue dans laquelle 4 doigts de main ceinturent le manche, chacun des 4 doigts étant logé dans une rainure transversale respective du manche.

L'invention a notamment pour objet d'améliorer sensiblement la prise par la main de l'utilisateur sur le manche d'article culinaire, et de rendre cette prise adaptée aux efforts particuliers qui apparaissent entre la main de l'utilisateur et le manche lors des mouvements que l'on imprime à l'article culinaire pendant son utilisation normale.

Selon un autre objet de l'invention, le manche selon l'invention peut être tenu de plusieurs manières, chaque manière étant adaptée à une utilisation particulière de l'article culinaire :

– dans une première position de tenue, la main est relativement proche de l'article culinaire lui-même, de sorte que l'on augmente la précision de maintien et que l'on diminue l'effort nécessaire pour porter l'article culinaire par le manche ;

– dans une seconde position, la main est légèrement écartée par rapport au corps d'article culinaire ;

– dans une troisième position, la main est très écartée de l'article culinaire, et se trouve ainsi protégée des projections de nourriture lors d'une cuisson sur feu vif.

Dans toutes les positions d'utilisation, la main s'adapte parfaitement à la forme particulière du manche selon l'invention, et cette forme particulière s'oppose au glissement relatif du manche et de la main d'une part dans le sens longitudinal du manche, d'autre part dans le sens d'une rotation axiale du manche.

D'autre part, la forme du manche selon l'invention est particulièrement bien adaptée à une utilisation dans laquelle, pour chacune des positions d'utilisation, l'utilisateur dispose son pouce longitudinalement sur la face supérieure du manche, et ses autres doigts en opposition transversalement sous la face inférieure du manche. On constate que la main se trouve ainsi en une position optimale pour supporter et contrer l'effort de basculement vers l'avant imprimé par la masse contenue dans le corps de l'article culinaire : l'articulation du poignet se trouve naturellement disposée en une orientation permettant de limiter sans effort musculaire le basculement vers le bas de l'article culinaire et permettant un débattement angulaire important de l'articulation pour imprimer à l'article culinaire des mouvements de basculement d'axe transversal vers le haut. Les efforts de tenue de l'article culinaire sont supportés par les forces de compression des doigts de main sur les faces supérieure et inférieure de manche.

Pour atteindre ces objets ainsi que d'autres, le manche selon l'invention comprend un corps allongé, terminé par une première extrémité ou extrémité de rattachement destinée à assurer la liaison du manche avec le corps d'article culinaire, et terminé par une seconde extrémité ou extrémité libre ; le manche comprend, sur sa partie inférieure, une première rainure transversale, à bords arrondis, disposée à faible distance de la première extrémité du manche ; cette rainure présente une section adaptée pour permettre l'engagement transversal d'un doigt de main de l'utilisateur ; le manche comprend sur sa face inférieure une seconde rainure transversale, à bords arrondis, écartée de la première rainure transversale en direction de la seconde extrémité du manche ; cette seconde rainure est destinée à permettre l'engagement transversal d'un doigt de main de l'utilisateur ; l'écartement entre la première et la seconde rainure transversale est compris entre 7 et 9 centimètres environ, pour être supérieur à l'écartement transversal normal moyen entre l'auriculaire et l'index d'une même main d'utilisateur lorsque les doigts sont jointifs ; le manche comprend avantageusement une première section de manche, comprise entre la première extrémité de manche et la seconde rainure transversale, et une seconde section de manche comprise entre la seconde extrémité de manche et la seconde rainure transversale ; les première et seconde sections de manche ne sont pas alignées entre elles, et forment entre elles un angle non plat ; la partie de manche comprise entre la seconde rainure transversale et la seconde extrémité du manche a une section transversale de forme et de dimension sensiblement constantes quelle que soit la position longitudinale considérée le long du manche.

Selon un mode de réalisation particulier, la seconde rainure transversale est écartée de la seconde extrémité du manche d'une distance comprise entre 3 et 8 centimètres. De cette manière, l'utilisateur peut tenir le manche avec son index encastré dans la seconde rainure transversale, tandis que la seconde extrémité du manche est logée dans le creux de sa main.

L'angle entre les première et seconde sections de manche peut avantageusement être compris entre 10 et 20°.

D'autres objets, caractéristiques et avantages de la présente invention ressortiront de la description suivante de modes de réalisation particuliers, faite en relation avec les figures jointes, parmi lesquelles : -
– la figure 1 représente une vue de côté d'un manche selon la présente invention ;
– la figure 2 représente une vue de dessus du manche de la figure 1 ;
– la figure 3 représente une vue de dessous du manche de la figure 1 ;
– la figure 4 représente une vue de côté d'un article culinaire muni d'un manche de la présente invention, dans une position de maintien dans laquelle la main est proche de l'article culinaire ;
– la figure 5 est une vue de côté de l'article culinaire de la figure 4, la main étant en position intermédiaire ; et
– la figure 6 est une vue de côté de l'article culinaire de la figure 4, la main étant en position éloignée de l'article culinaire.

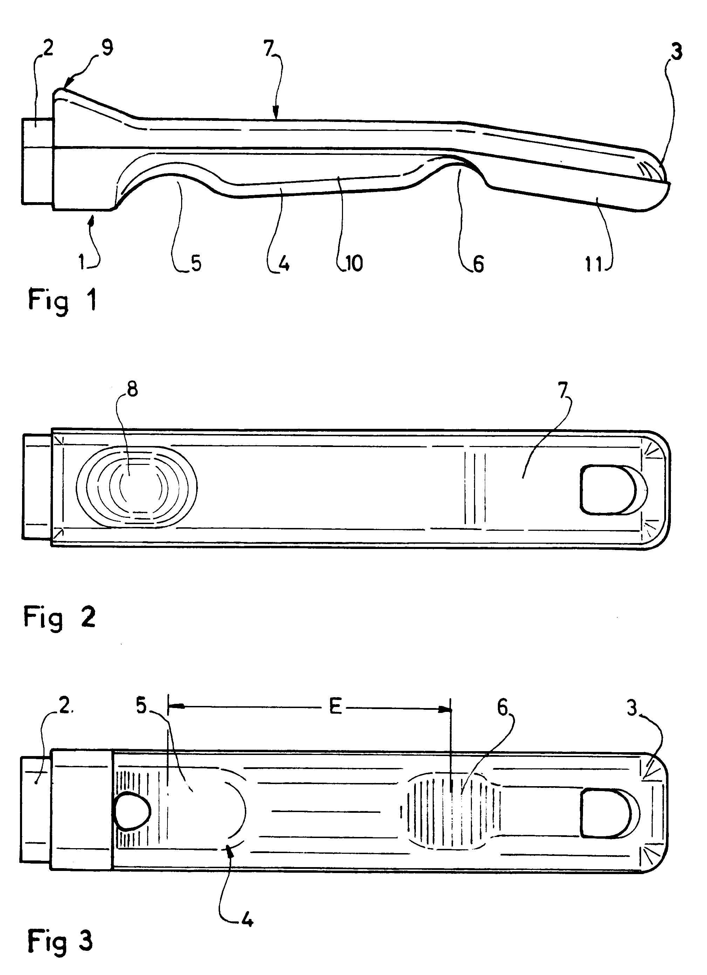

Dans le mode de réalisation représenté sur les figures 1 à 3, le manche 1 comprend un corps allongé, terminé par une première extrémité 2 ou extrémité de rattachement, conformée pour s'adapter et se fixer sur un article culinaire non représenté. Le manche se termine, à l'opposé, par une seconde extrémité ou extrémité libre 3.

La face inférieure 4 du manche comprend une première rainure transversale 5, à bords arrondis, disposée à faible distance de la première extrémité 2 du manche. Le manche comprend, sur sa face inférieure 4, une seconde rainure transversale 6, à bords arrondis, écartée de la première rainure transversale en direction de la seconde extrémité 3 du manche.

L'écartement E entre les première 5 et seconde 6 rainures transversales, ou distance séparant le fond des rainures, est avantageusement compris entre 7 et 9 centimètres environ. De cette manière, cet écartement E est supérieur à la distance moyenne entre l'auriculaire et l'index d'une même main d'un utilisateur normal, lorsque ses doigts sont jointifs.

Dans le mode de réalisation représenté sur les figures, les rainures transversales 5 et 6 ont avantageusement une forme cylindrique à section demi-circulaire, la dimension de la section étant juste suffisante pour permettre l'encastrement d'un doigt de main, comme le représentent les dessins.

La face supérieure 7 du manche comprend, sensiblement à l'opposé de la première rainure 5, un logement 8. Le logement 8, dans le mode de réalisation représenté, est un creux elliptique, permettant l'encastrement de l'extrémité d'un pouce de l'utilisateur. Le logement supérieur 8 est légèrement décalé en direction de la première extrémité 2 de manche par rapport à la première rainure transversale 5, comme le représentent les figures. On remarque, sur la figure 1, que, au voisinage de la première extrémité 2 du manche, la face supérieure 7 présente un relèvement en bec 9, assurant l'espacement du pouce par rapport à l'article culinaire. Le relèvement 9 fait office de limiteur de positionnement du pouce, pour éviter tout contact avec les parties métalliques éventuellement chaudes de l'article culinaire.

De même, au voisinage de la première extrémité 2 du manche, la face inférieure 4 du manche présente un abaissement pour limiter le positionnement des doigts de la main et éviter tout contact avec les parties métalliques éventuellement chaudes de l'article culinaire.

Dans le mode de réalisation représenté sur la figure 1, le manche comprend deux parties non alignées l'une par rapport à l'autre : une première section 10 de manche, comprise entre la seconde rainure transversale 6 et la première extrémité 2 de manche, et une seconde section 11 de manche, comprise entre la seconde rainure transversale 6 et la seconde extrémité 3 du manche. Les première et seconde sections de manche forment entre elles un angle non plat, avantageusement compris entre 10 et 20°. Comme on le voit sur la figure, l'orientation des sections de manche l'une par rapport à l'autre est telle que les faces inférieures des première section 10 et seconde section 11 de manche sont rapprochées l'une de l'autre.

La section transversale du manche est avantageusement aplatie, et telle que la largeur du manche est supérieure à sa hauteur : les faces supérieure 7 et inférieure 4 sont plus larges que les faces latérales du manche.

La partie de manche comprise entre la première rainure transversale 5 et la seconde rainure transversale 6 a une section transversale de forme et de dimension sensiblement constantes quelque soit la position longitudinale considérée le long du manche. Il en est de même de la partie de manche comprise entre la seconde rainure transversale 6 et la seconde extrémité 3 du manche.

Lorsque le manche est fixé à un corps d'article culinaire, on s'arrange pour que la face inférieure du manche soit orientée dans la même direction que la face inférieure de l'article culinaire. En d'autres termes, la face inférieure du manche est tournée vers le bas lorsque l'article culinaire est posé par son fond sur un plan horizontal.

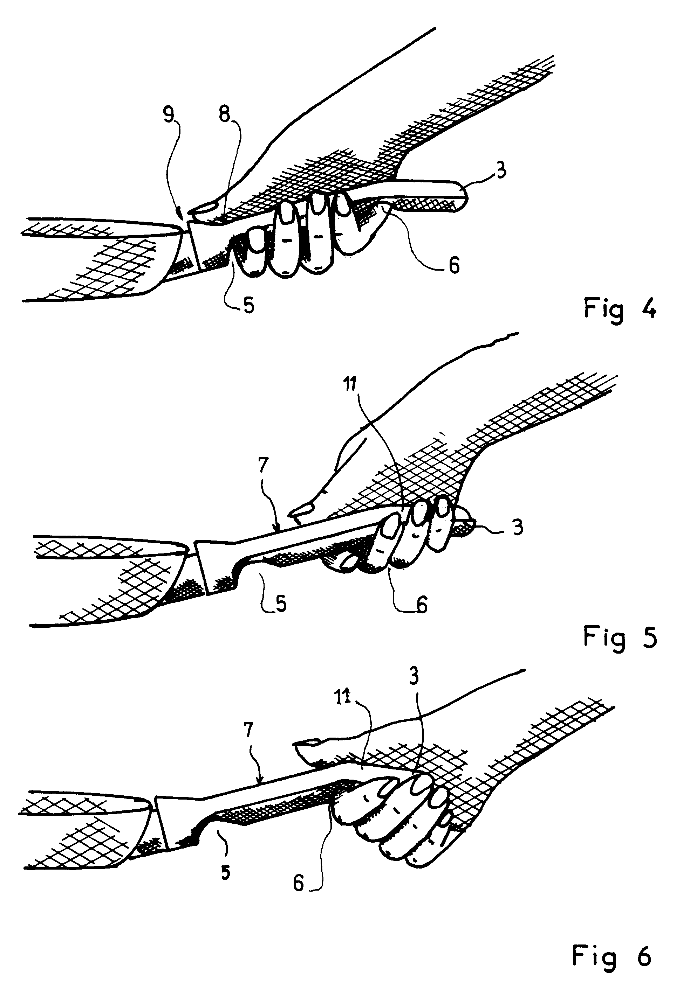

L'utilisation d'un manche selon la présente invention est illustrée sur les figures 4 à 6.

Sur la figure 4, on a représenté une position de la main pour une manutention du récipient hors du feu de cuisson. Dans cette position, le pouce de la main est logé dans le logement 8, l'index de la main est disposé transversalement par rapport au manche et est encastré dans la première rainure transversale 5 ; on constat que l'auriculaire est en une position intermédiaire entre la première rainure transversale 5 et la seconde rainure transversale 6, ou encastré dans la seconde rainure 6. La main est alors en position rapprochée par rapport à l'article culinaire, ce qui tend à réduire les efforts nécessaires pour porter l'article culinaire ; le rapprochement de la main par rapport au corps d'article culinaire est toutefois limité d'une part par la première rainure transversale 5, et d'autre part par le logement supérieur 8 et la remontée 9.

On a représenté sur la figure 5 un article culinaire tenu par une main disposée en position intermédiaire. Cette position permet une manutention du récipient sur le foyer de cuisson en fonctionnement. Dans cette position, le majeur ou l'annulaire de la main vient se loger dans la seconde rainure transversale 6, tandis que l'index de la main est en une position intermédiaire entre la première rainure transversale 5 et la seconde rainure transversale 6. Le pouce est en appui sur la face supérieure du manche, et la seconde section 11 du manche suit le creux de la main.

On a représenté sur la figure 6 la troisième position de tenue de l'article culinaire avec un manche selon la présente invention. Cette position est particulièrement adaptée pour faire frire ou rissoler des aliments dans le cas d'une utilisation de poêle à frire. Dans cette position, l'index de la main est logé dans la seconde rainure transversale 6, le pouce est en appui sur la face supérieure du manche, et la seconde extrémité 3 du manche vient se loger dans le creux de la main.

La présente invention n'est pas limitée aux modes de réalisation qui ont été explicitement décrits, mais elle en inclut les diverses variantes et généralisations contenues dans le domaine des revendications ci-après.

## Revendications

1. Manche pour article culinaire, comprenant un corps allongé terminé par une première (2) extrémité ou extrémité de rattachement destinée à assurer la liaison du manche avec le corps d'article culinaire, et par une seconde extrémité ou extrémité libre (3), sa face inférieure (4) comprenant une première rainure transversale (5), à bords arrondis, disposée à faible distance de la première extrémité (2) du manche, la première rainure transversale (5) présentant une section adaptée pour permettre l'engagement d'un doigt de l'utilisateur, le manche comprenant une seconde rainure transversale (6) à bords arrondis, écartée de la première rainure transversale en direction de la seconde extrémité (3) du manche, destinée à permettre l'engagement d'un doigt de main de l'utilisateur, caractérisé en ce que :

   – l'écartement (E) entre la première (5) et la seconde (6) rainures transversales est compris entre 7 et 9 centimètres environ, pour être supérieur à l'écartement normal moyen de l'auriculaire et de l'index d'une main d'utilisateur lorsque les doigts sont jointifs,

   – le manche comprend une première section de manche (10) comprise entre la seconde rainure transversale (6) et la première extrémité (2) de manche, et une seconde section de manche (11) comprise entre la seconde rainure (6) et la seconde extrémité (3) de manche, les première et seconde sections de manche étant non alignées et formant un angle non plat l'une par rapport à l'autre,

   – la partie de manche comprise entre la seconde rainure transversale (6) et la seconde extrémité (3) du manche a une section transversale de forme et de dimension sensiblement constantes quelle que soit la position longitudinale considérée le long du manche.

2. Manche selon la revendication 1, caractérisé en ce que la seconde rainure transversale (6) est écartée de la seconde extrémité (3) du manche d'une distance comprise entre 3 et 8 centimètres, de sorte que l'utilisateur peut tenir le manche avec son index encastré dans la seconde rainure transversale (6) tandis que la seconde extrémité (3) du manche est logée dans le creux de sa main.

3. Manche selon la revendication 2, caractérisé en ce que les sections de manche forment entre elles un angle tel que les faces inférieures des sections de manche sont rapprochées l'une de l'autre.

4. Manche selon la revendication 3, caractérisé en ce que l'angle entre les première et seconde sections de manche est compris entre 10 et 20°.

5. Manche selon l'une quelconque des revendications 1 à 4, caractérisé en ce qu'il comprend en outre, sur sa face supérieure (7), un logement supérieur (8) pour le logement du pouce de l'utilisateur, le logement supérieur (8) étant légèrement décalé en direction de la première extrémité (2) de manche par rapport à la première rainure transversale (5).

6. Manche selon l'une quelconque des revendications 1 à 5, caractérisé en ce que la partie de manche comprise entre la première rainure transversale (5) et la seconde rainure transversale (6) a une section transversale de forme et de dimension sensiblement constantes quelle que soit la position longitudinale considérée le long du manche.

7. Manche selon l'une quelconque des revendications 1 à 6, caractérisé en ce qu'il comprend une section transversale aplatie dont les faces supérieure et inférieure sont plus grandes que les faces latérales.

8. Article culinaire, caractérisé en ce qu'il comprend un manche selon l'une quelconque des revendications 1 à 7.

9. Article culinaire selon la revendication 8, caractérisé en ce que le manche est orienté par rapport au corps de l'article culinaire de façon que sa face inférieure (4) est orientée dans le même sens que la face inférieure de l'article culinaire.

**Patentansprüche**

1. Griff für Küchenartikel, der einen länglichen Körper aufweist, welcher in einem ersten Ende (2) oder Anschlußende, das für die Verbindung des Griffes mit dem Körper des Küchenartikels bestimmt ist, sowie in einem zweiten Ende oder freien Ende (3) endet und dessen Unterseite (4) mit einer ersten Querrille (5) mit gerundeten Rändern in einem geringen Abstand von dem ersten Ende (2) des Griffes versehen ist, wobei die erste Querrille (5) ein Profil aufweist, welches dafür bestimmt ist, einen Finger des Benutzers einfügen zu lassen, und wobei der Griff mit einer zweiten Querrille (6) mit gerundeten Rändern versehen ist, die von der ersten Querrille in Richtung des zweiten Endes (3) des Griffes beabstandet und dafür bestimmt ist, einen Finger der Hand des Benutzers einfügen zu lassen,
dadurch **gekennzeichnet**, daß
– der Abstand (E) zwischen der ersten (5) und der zweiten (6) Querrille etwa zwischen 7 und 9 cm beträgt, um damit den normalen mittleren Abstand zwischen dem kleinen Finger und dem Zeigefinger einer Hand des Benutzers zu übertreffen, wenn die Finger aneinandergelegt sind,
– der Griff einen ersten Griffabschnitt (10) aufweist, der zwischen der zweiten Querrille (6) und dem ersten Ende (2) des Griffes verläuft, und einen zweiten Griffabschnitt (11), der zwischen der zweiten Querrille (6) und dem zweiten Ende (3) des Griffes verläuft, wobei die ersten und zweiten Griffabschnitte nicht aufeinander ausgerichtet sind und wechselseitig keinen flachen Winkel ausbilden, und
– der Abschnitt des Griffes zwischen der zweiten Querrille (6) und dem zweiten Ende (3) des Griffes einen Querschnitt von im wesentlichen konstanter Form und konstanten Abmessungen an jeder beliebigen Stelle entlang des Griffes aufweist.

2. Griff nach Anspruch 1, dadurch **gekennzeichnet**, daß die zweite Querrille (6) von dem zweiten Ende (3) des Griffes über eine Distanz zwischen 3 und 8 cm beabstandet ist, sodaß der Benutzer den Griff mit seinem in die zweite Querrille (6) eingelegten Zeigefinger halten kann, während das zweite Ende (3) des Griffes in seiner hohlen Hand angeordnet ist.

3. Griff nach Anspruch 2, dadurch **gekennzeichnet**, daß die Griffabschnitte unter sich einen solchen Winkel bilden, daß die Unterseiten der Griffabschnitte gegeneinander angenähert sind.

4. Griff nach Anspruch 3, dadurch **gekennzeichnet**, daß der Winkel zwischen den ersten und zweiten Griffabschnitten zwischen 10° und 20° beträgt.

5. Griff nach einem der Ansprüche 1 bis 4, dadurch **gekennzeichnet**, daß seine Oberseite (7) noch eine obere Mulde (8) für die Aufnahme des Daumens des Benutzers aufweist, wobei die obere Mulde (8) leicht in Richtung des ersten Endes (2) des Griffes in Bezug auf die erste Querrille (5) versetzt ist.

6. Griff nach einem der Ansprüche 1 bis 5, dadurch **gekennzeichnet**, daß der Bereich des Griffes zwischen der ersten Querrille (5) und der zweiten Querrille (6) einen Querschnitt von im wesentlichen konstanter Form und konstanten Abmessungen an jeder beliebigen Stelle entlang des Griffes aufweist.

7. Griff nach einem der Ansprüche 1 bis 6, dadurch **gekennzeichnet**, daß er einen abgeflachten Querschnitt aufweist, dessen obere und untere Seiten größer sind als die seitlichen Flächen.

8. Küchenartikel, dadurch **gekennzeichnet**, daß er einen Griff nach einem der Ansprüche 1 bis 7 aufweist.

9. Küchenartikel nach Anspruch 8, dadurch **gekennzeichnet**, daß der Griff in Bezug auf den Körper des Küchenartikels derart ausgerichtet ist, daß seine Unterseite (4) in derselben Richtung ausgerichtet ist wie die Unterseite des Küchenartikels.

**Claims**

1. A handle for a kitchen article, comprising an elongate body ending in a first end (2) or attachment end providing connection of the handle with the kitchen article body and in a second end or free end (3), its lower face (4) comprising a first transverse groove (5), with rounded edges, disposed at a small distance from the first end (2) of the handle, the first transverse groove (5) having a section adapted for engagement of a finger of the user, the handle comprising a second transverse groove (6) with rounded edges, spaced apart from the first transverse groove in the direction of the second end (3) of the handle, for engaging a finger of the user,
characterized in that :
– the spacing (E) between the first (5) and second (6) transverse grooves is comprised between about 7 and 9 centimetres, in order to be greater than the normal mean spacing between the little finger and the forefinger of a hand of a user when his fingers are touching,

– the handle comprises a first handle section (10) between the second transverse groove (6) and the first handle end (2), and a second handle section (11) between the second groove (6) and the second handle end (3), the first and second handle sections being non aligned and forming a non flat angle with respect to each other,

– the handle portion comprised between the second transverse groove (6) and the second handle end (3) has a cross section whose form and size are substantially constant whatever the longitudinal position considered along the handle.

2. The handle as claimed in claim 1, characterized in that the second transverse groove (6) is spaced from the second end (3) of the handle by a distance between 3 and 8 centimetres, so that the user may hold the handle with his forefinger engaged in the second transverse groove (6), whereas the second end (3) of the handle is accomodated in the hollow of his hand.

3. The handle as claimed in claim 2, characterized in that the handle sections form therebetween an angle such that the lower faces of the handle sections are close to one another.

4. The handle as claimed in claim 3, characterized in that the angle between the first and second handle sections is between 10 and 20°.

5. The handle as claimed in any of claims 1 to 4, characterized in that it further comprises, on its upper face (7), an upper housing (8) for accomodating the thumb of the user, the upper housing (8) being slightly offset in the direction of the first handle end (2) with respect to the first transverse groove (5).

6. The handle as claimed in any of claims 1 to 5, characterized in that the handle portion comprised between the first transverse groove (5) and the second transverse groove (6) has a cross section whose form and size are substantially constant whatever the longitudinal position considered along the handle.

7. The handle as claimed in any of claims 1 to 6, characterized in that it comprises a flattened cross section whose upper and lower faces are larger than their lateral faces.

8. A kitchen article, characterized in that it comprises a handle such as claimed in one of claims 1 to 7.

9. The kitchen article as claimed in claim 8, characterized in that the handle is oriented with respect to the body of the kitchen article so that its lower face (4) is oriented in the same direction as the lower face of the kitchen article.

Fig 1

Fig 2

Fig 3

Fig 4

Fig 5

Fig 6